# EUROPEAN PATENT APPLICATION

(11) **EP 4 535 604 A1**
(43) Date of publication of application: **09.04.2025**
(21) Application number: 23931189.7
(22) Date of filing: 27.12.2023
(51) Int. Cl.: H02J 7/00, H02J 9/00

(54) **POWER SUPPLY SYSTEM AND ELECTRIC VEHICLE**

(30) Priority: 13.08.2023 CN 202311012952
(71) Applicant: Sumec Hardware & Tools Co., Ltd., Nanjing, Jiangsu 210000 (CN); Nanjing Sumec Intelligence Technology Co., Ltd., Nanjing, Jiangsu 210000 (CN)
(72) Inventor: LIU, Kai, Nanjing, Jiangsu 210000 (CN); XIANG, Yingdian, Nanjing, Jiangsu 210000 (CN); YUAN, Guohui, Nanjing, Jiangsu 210000 (CN); WANG, Qiang, Nanjing, Jiangsu 210000 (CN); PEI, Yong, Nanjing, Jiangsu 210000 (CN)
(74) Representative: Cleanthous, Marinos
(86) International application number: PCT/CN2023/142319
(87) International publication number: WO 2025/035682

(57) **Abstract**

The present disclosure provides a power supply and electric vehicle, including a battery, an input component, an output component, and an inverter. The input component includes an alternating current input interface and a direct current input interface; the output component includes an alternating current output interface and a direct current output interface; and the inverter is configured to perform conversion between alternating current and direct current. According to the power supply and electric vehicle, the vehicle has various electric energy inputting forms and has various output ports for alternating current/direct current, so that it is convenient for a user to cope with outdoor emergencies, and the power supply and electric vehicle can be used as an emergency power supply.

## Description

### CROSS-REFERENCE TO RELATED APPLICATION

This application claims priority to Chinese Patent Application No. 2023110129520, entitled "POWER SUPPLY SYSTEM AND ELECTRIC VEHICLE" and filed on August 13, 2023. The entire content of the above-referenced application is incorporated herein by reference.

### TECHNICAL FIELD

The present disclosure relates to the field of electric vehicles, and in particular, to a power supply system and electric vehicle.

### BACKGROUND

An electric vehicle is widely used in the field of gardening tools. The electric vehicle is usually provided with a power device that can drive the electric vehicle to travel and functional components configured to perform specific tasks. The power device and the functional components can use the same power source or different power sources according to a specific design of a product. The tasks that can be performed by the functional components typically include mowing, fertilization, snow sweeping, and the like.

With the popularization of environmental protection requirements, the widespread application of green energy, and the upgrade of a lithium battery technology, more and more electric vehicles use lithium batteries as their energy supply. Generally, the electric vehicles are used in outdoor harsh environments. For example, a riding lawn mower, a sitting lawn mower, and the like need to be used in outdoor environments. Many unexpected situations may occur as a working terrain has many grasses and trees and is relatively complex. For example, it is hard for a vehicle to return if the vehicle has low battery outdoors; a user needs to wait in place if a vehicle loses its power outdoors; and an additional power supply is required to use other tools carried on a vehicle when the vehicle works outdoors.

It is difficult for the existing electric vehicles, especially riding lawn mowing equipment, to solve the above problems.

### SUMMARY

The present disclosure provides a power supply system and electric vehicle, which has various electric energy inputting forms, so that the power supply system and electric vehicle can obtain electric energy outdoors and can also be used as an emergency power supply for a user to cope with outdoor emergencies.

Embodiments of the present disclosure are achieved below:
In a first aspect, this embodiment provides a power supply system and electric vehicle, including:
a battery;
an input component and an output component, wherein
the input component includes an alternating current input interface and a direct current input interface;
the output component includes an alternating current output interface and a direct current output interface; and
an inverter, wherein the inverter is configured to perform conversion between alternating current and direct current.

Optionally, a rated voltage of the battery is not less than 36 V, and alternating current output power of the battery is not less than 500 W.

Optionally, the input component includes a photovoltaic input interface configured to be connected to a photovoltaic panel; the power supply system and electric vehicle further includes a Maximum Power Point Tracking (MPPT); and the photovoltaic input interface, the MPPT, and the inverter are electrically connected to each other in sequence.

Optionally, the output component includes an output panel; the output panel is arranged at a housing portion of the electric vehicle; and the output panel is further provided with an openable cover plate.

Optionally, the cover plate is provided with a light-emitting element and/or a wireless charging component.

Optionally, the output panel is provided with an alternating current output region and a direct current output region which are arranged at an interval; an alternating current output interface is arranged at a position, corresponding to the alternating current output region, on the output panel; and a direct current output interface is arranged at a position, corresponding to the direct current output region, on the output panel.

Optionally, a display element configured to display parameter information of the electric vehicle is mounted on the output panel.

Optionally, a switch button is arranged on the output panel and is configured to control turning on and turning off of all the interfaces and/or the display element on the output panel.

Optionally, a display region of the display element includes a battery state display region, another state display region, and an output state display region; the battery state display region is located in the middle of the display region; the another state display region and the output state display region are located on an upper side and a lower side of the battery state display region respectively; or, the another state display region and the output state display region are located on a left side and a right side of the battery state display region respectively;
the battery state display region is configured to display a battery level, usable time, input power, output power, and whether the power is overloaded;
the output state display region displays a working state of an output port; the working state of the output port includes: whether the output port is faulty and whether the output port is in use, and each type of port is indicated by a separate icon; and
the another state display region is configured to display other information except information contained in the battery state display region and the output state display region.

Optionally, the information displayed on the another state display region includes a battery temperature, an ambient temperature, a state of a heat dissipater, a volume of sound source equipment, charging time, a Bluetooth connection state, and a wireless connection state.

Optionally, the cover plate includes at least two cover bodies that are independently openable; and the at least two cover bodies can cover the entire output panel after being closed.

Optionally, the cover plate includes at least two cover bodies that are independently openable; and the at least two cover bodies are configured to cover the alternating current output region and the direct current output region respectively after being closed.

Optionally, wherein the cover plate includes an upper cover and a lower cover; a lighting component is arranged on an inner side of the upper cover; and the wireless charging component is arranged on an inner side of the lower cover.

Optionally, a maximum opening and closing angle of the above upper cover does not exceed 270 degrees; a maximum opening and closing angle of the lower cover does not exceed 180 degrees; and when the electric vehicle stops on a horizontal plane, the lower cover is in the maximum opening and closing angle, and an inner side surface of the lower cover is horizontal.

Optionally, an auxiliary switch is arranged at a position, corresponding to the switch button, on the cover plate, and the auxiliary switch is configured to control the turning on and turning off of all the interfaces and/or the display element on the output panel by being in direct or indirect contact with the switch button.

Optionally, a transparent view element made of a transparent material is arranged on the cover plate; and the transparent view element is configured to view information on the display element through the transparent view element when the cover plate is closed.

Optionally, the upper cover and the lower cover are further provided with switch buttons configured to control the lighting component and the wireless charging component.

Optionally, a sensor is mounted in the upper cover and/or the lower cover; the sensor is configured to detect an opening state of the upper cover and/or the lower cover; and when the upper cover and/or the lower cover is opened, the lighting component on the upper cover and/or the wireless charging component on the lower cover is automatically turned on.

Optionally, the power supply system and electric vehicle further includes a voice module configured to: receive and process external sound information, and form instructions to control the turning on and turning off of the alternating current output interface and the direct current output interface.

Optionally, the cover plate is movably connected to the output panel through a connecting structure to enable the cover plate to switch between a closed state and an opened state.

Optionally, the connecting structure includes a wrapping member, a rotating member, and a fixing member; the wrapping member is connected to the output panel, and the wrapping member and the output panel cooperate with each other to define a mounting chamber; the rotating member is rotatably mounted in the mounting chamber; and the cover plate is connected to the rotating member to enable the cover plate to rotate relative to the output panel.

Optionally, the connecting structure is configured as a damping hinge.

Optionally, both the wrapping member and the cover plate are provided with routing notches configured to allow a wiring harness to pass through.

Optionally, a magnetic suction component is arranged between the cover plate and the output panel.

Optionally, the auxiliary switch is connected to the lower cover through an elastic member, and the elastic member is configured to enable the auxiliary switch to have a movement trend away from the switch button.

Compared with the prior art, the beneficial effects of the embodiments of the present disclosure include, for example:

According to the power supply system and the electric vehicle, by the arrangement of the inverter, alternating current and direct current can be converted, thereby selectively using the alternating current input interface, the direct current input interface, the direct current output interface, and the alternating current output interface to achieve inputting and outputting of various electric energy forms. The product is used flexibly and has a wide range of application. Moreover, the overall structure is compact, small in size, lightweight, and cost-effective.

### BRIEF DESCRIPTION OF THE DRAWINGS

For clearer descriptions of the technical solutions of the embodiments of the present disclosure, the drawings required to be used in the embodiments are briefly introduced below. It should be understood that the drawings below are only some embodiments of the present disclosure. Therefore, the embodiments shall not be regarded as limitations on the scope. A person of ordinary skill in the art can also obtain other relevant drawings according to these drawings without creative work.
FIG. 1 is a schematic structural diagram of an electric vehicle in one viewing angle according to Embodiment I of the present disclosure;
FIG. 2 is a schematic structural diagram of an electric vehicle in another viewing angle according to Embodiment I of the present disclosure;
FIG. 3 is a schematic diagram of a control system of an electric vehicle according to Embodiment I of the present disclosure;
FIG. 4 is a schematic diagram of a power supply system of an electric vehicle according to Embodiment I of the present disclosure;
FIG. 5 is a schematic structural diagram of an output component in a first viewing angle according to Embodiment I of the present disclosure;
FIG. 6 is a schematic structural diagram of an output component in a second viewing angle according to Embodiment I of the present disclosure;
FIG. 7 is a schematic structural diagram of an output component in a third viewing angle according to Embodiment I of the present disclosure;
FIG. 8 is a schematic structural diagram of an output component in a fourth viewing angle according to Embodiment I of the present disclosure;
FIG. 9 is a schematic structural diagram of an output component in a fifth viewing angle according to Embodiment I of the present disclosure;
FIG. 10 is a schematic structural diagram of an output component in a sixth viewing angle according to Embodiment I of the present disclosure;
FIG. 11 is a schematic structural diagram of an output component in a seventh viewing angle according to Embodiment I of the present disclosure;
FIG. 12 is a schematic diagram of an interface of a display unit according to Embodiment I of the present disclosure;
FIG. 13 is a schematic structural diagram of an input component according to Embodiment I of the present disclosure;
FIG. 14 is a schematic structural diagram of connection between an electric vehicle and a photovoltaic panel according to Embodiment I of the present disclosure;
FIG. 15 is a schematic structural diagram of an output component in a first viewing angle shown in Embodiment II of the present disclosure;
FIG. 16 is a schematic structural diagram of an output component in a second viewing angle shown in Embodiment II of the present disclosure;
FIG. 17 is a schematic structural diagram of an output component in a third viewing angle shown in Embodiment II of the present disclosure;
FIG. 18 is a schematic structural diagram of an output component in a first viewing angle shown in Embodiment III of the present disclosure;
FIG. 19 is a schematic structural diagram of an output component in a second viewing angle shown in Embodiment III of the present disclosure;
FIG. 20 is a structural exploded diagram of an output component shown in Embodiment III of the present disclosure;
FIG. 21 is a schematic structural diagram of a mounting window and a mounting seat on an output panel shown in Embodiment III of the present disclosure;
FIG. 22 is a structural exploded diagram of a lower cover shown in Embodiment III of the present disclosure;
FIG. 23 is a structural exploded diagram of an upper cover shown in Embodiment III of the present disclosure;
FIG. 24 is a schematic structural diagram of a portion A of a mounting seat shown in Embodiment III of the present disclosure;
FIG. 25 is an enlarged view of the portion A in FIG. 24;
FIG. 26 is a schematic structural diagram of a fixing member according to Embodiment III of the present disclosure;
FIG. 27 is a schematic structural diagram of a rotating member according to Embodiment III of the present disclosure;
FIG. 28 is a schematic diagram of a sectional structure after a lower cover and an output panel are combined according to Embodiment III of the present disclosure;
FIG. 29 is an enlarged view of a portion B in FIG. 28;
FIG. 30 is a schematic structural diagram after an output panel, a rotating member, a fixing member, and a wrapping member are combined according to Embodiment III of the present disclosure;
FIG. 31 is a schematic structural diagram of a wrapping member;
FIG. 32 is a schematic structural diagram of a routing notch on a lower cover according to Embodiment III of the present disclosure;
FIG. 33 is a sectional diagram of an auxiliary switch on a lower cover according to Embodiment III of the present disclosure;
FIG. 34 is a schematic structural diagram of a vehicle body in a first viewing angle according to Embodiment III of the present disclosure; and
FIG. 35 is a schematic structural diagram of a vehicle body in a second viewing angle according to Embodiment III of the present disclosure.

### Reference numerals:

100: vehicle body; 101: frame; 102: rear bracket; 103: rear covering member; 104: battery pack;
200 (200a, 200b, 200c): output component; 201: output panel; 202: upper cover; 203: lower cover; 2031: housing; 2032: bottom plate; 204: alternating current output region; 205: direct current output region; 206: display element; 2061: battery state display region; 2062: another state display region; 2063: output state display region; 207: switch button; 208: cigarette lighter socket; 209: 120 V socket; 210: 125 V socket; 211: Universal Serial Bus (USB) port; 212: Type-C port; 213: wireless charging element; 214: light source component; 215: first suction accessory; 216: second suction accessory; 217: transparent view element; 218: auxiliary switch; 219: wrapping member; 220: rotating member; 2201: first rotating portion; 2202: second rotating portion; 221: fixing member; 2211: fixed seat; 222: mounting window; 223: mounting seat; 2231: rotary mounting seat; 2232: fixed mounting seat; 224: connecting seat; 225: spring; 226: cooling element; 227: Printed Circuit Board (PCB); 228: auxiliary bracket; 230: routing notch;
300: input component; 301: cover plate; 302: alternating current input interface; 303: direct current input interface; and
400: photovoltaic panel.

### DETAILED DESCRIPTION OF THE EMBODIMENTS

In order to make the objectives, technical solutions, and advantages of the embodiments of the present disclosure clearer, the technical solutions in the embodiments of the present disclosure are clearly and completely described below with reference to the accompanying drawings in the embodiments of the present disclosure. Apparently, the described embodiments are merely some rather than all of the embodiments of the present disclosure. Assemblies of the embodiments of the present disclosure commonly described and shown in the accompanying drawings here may be arranged and designed in a variety of different configurations.

Accordingly, the following detailed descriptions of the embodiments of the present disclosure provided in the accompanying drawings are not intended to limit the scope of the claimed present disclosure, but merely represents selected embodiments of the present disclosure. All other embodiments obtained by a person of ordinary skill in the art based on the embodiments of the present disclosure without making creative efforts shall fall within the protection scope of the present disclosure.

It should be noted that similar reference numerals and letters indicate similar items in the following drawings. Therefore, once a certain item is defined in one drawing, it is unnecessary to further define and explain it in the subsequent drawings.

The "and/or" in the present disclosure means situations where two elements exist separately or simultaneously.

The "inside" and "outside" in the present disclosure mean that a direction from a signal line to the interior of a working region relative to the signal line itself is inside, and vice versa. They are not specific limitations on devices and mechanisms of the present disclosure.

In the description of the present disclosure, it should be noted that orientations or positional relationships indicated by the terms "center", "upper", "lower", "left", "right", "vertical", "horizontal", "inner", "outer", and the like are orientations or positional relationships as shown in the drawings or orientations or positional relationships where this invention product is often located during use, and are only for the purpose of facilitating and simplifying the description of the present disclosure instead of indicating or implying that devices or elements indicated must have particular orientations, and be constructed and operated in the particular orientations, so that these terms are not construed as limiting the present disclosure. In addition, the terms "first", "second", "third", and the like are only for the purpose of description, and may not be understood as indicating or implying the relative importance.

In addition, the terms "horizontal", "vertical", and the like do not mean that a component is required to be absolutely horizontal or suspended, but can slightly tilt. For example, "horizontal" only refers to a direction being more horizontal relative to "vertical", and it does not mean that the structure needs to be completely horizontal, but can slightly tilt.

In the description of the present disclosure, it should be noted that unless otherwise specified and limited, the terms "arrange", "mount", "connect", and "connection" should be broadly understood. For example, it can be a fixed connection, detachable connection, integrated connection, mechanical connection, electrical connection, direct connection, indirect connection via an intermediate element, or internal communication between two elements. A person of ordinary skill in the art can understand the specific meanings of the above terms in the present disclosure according to specific situations.

Furthermore, unless otherwise specified, the technical solutions of the following embodiments of the present disclosure can be combined with each other.

### Embodiment I

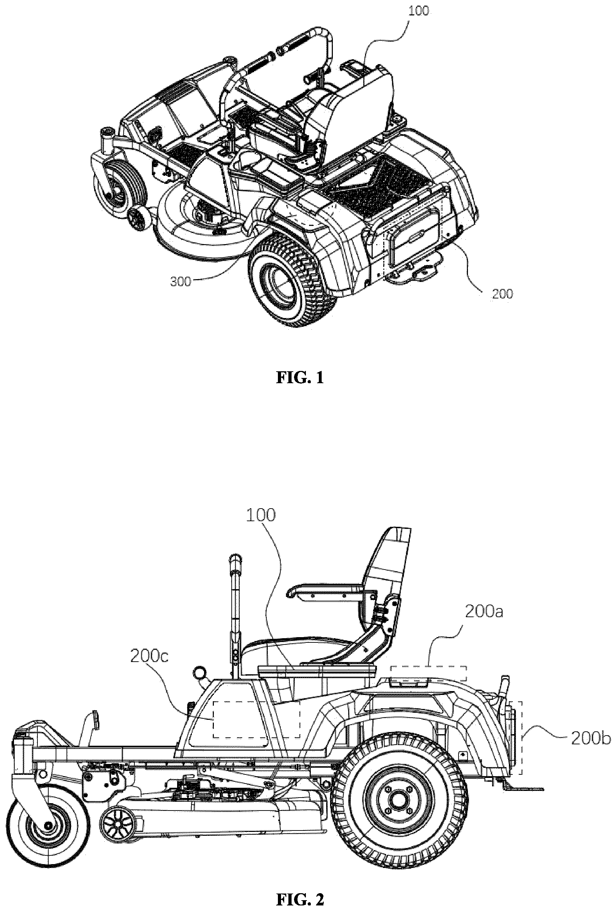

FIG. 1 shows a power supply system and electric vehicle. The electric vehicle may be, but is not limited to, a sitting lawn mower. In this embodiment, the sitting lawn mower is taken as an example for further explanation. In this embodiment, the sitting lawn mower includes a vehicle body 100, and a power supply, a driving component, a steering component, a control component, a functional component, an input component, an output component, and the like which are all arranged on the vehicle body 100.

In this embodiment, it should be noted that the power supply may be configured as a battery. For example, the power supply may be a lithium battery. The driving component may be configured as a motor. The functional component may be configured as a mowing cutterhead driven by the motor. The input component and the output component 200 are both mounted outside the vehicle body. The input component is configured to be connected to external energy source, which can charge the lithium battery of the sitting lawn mower. The output component 200 is provided with a port configured to be electrically connected to external equipment, thereby supplying power to the external equipment. For example, the external equipment may be a tablet, a mobile phone, a power bank, or the like.

As shown in FIG. 2, there may be one or more output components 200. For example, in this embodiment, there are three output components 200. The three output components may be arranged at different positions outside the sitting lawn mower. Specifically, the three output components 200 are respectively arranged at a rear part, a side part, and a top behind a seat of the lawn mower. The output component 200b is located at the rear part of the lawn mower; the output component 200c is located at the side part of the lawn mower; and the output component 200a is located at the top behind the seat of the lawn mower. It should be understood that positions below the seat, on a surface of a pedal, on armrests next to the seat, and the like that are not shown in FIG. 2 can also be used to arrange output components 200. This embodiment takes the output component 200b arranged at the rear part of the vehicle body 100 as an example for further explanation.

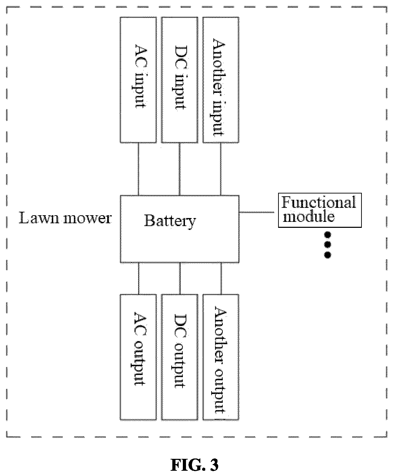

FIG. 3 is a schematic diagram of a control system of a power supply system and electric vehicle. The battery of the lawn mower is simultaneously connected to an alternating current (AC) input, an AC output, a direct current (DC) input, a DC output, other inputs, other outputs, and functional modules. It should be noted that other inputs may include a photovoltaic panel input and the like, and other outputs may include an output of wireless charging equipment. The functional modules may include electronic components such as a driving module and a cutting module that require electric energy on the lawn mower.

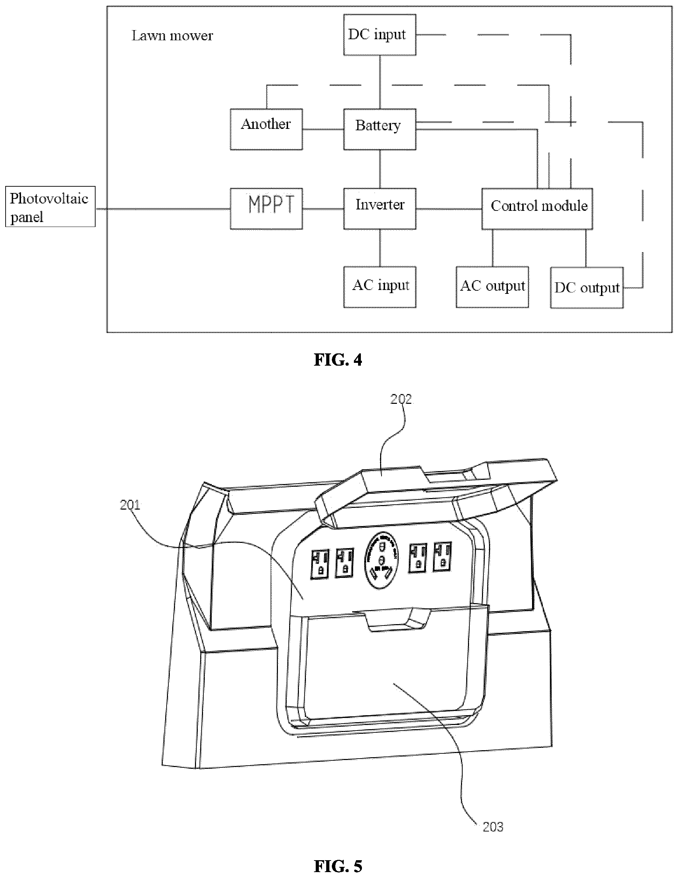

A block diagram shown in FIG. 4 is used to explain a power supply system inside the electric vehicle. The power supply system inside the lawn mower includes a battery, an inverter, and a control module. The battery is electrically connected to the inverter, and the inverter is electrically connected to the AC input. The AC input may be configured to be connected to a connecting port of alternating current charging equipment. The control module is electrically connected to the inverter, and the control module is electrically connected to the AC output and the DC output to output electric energy. The battery itself can be directly electrically connected to the DC output, and a necessary electronic element can be arranged to adjust output parameters. This embodiment will not describe this in detail. In an actual implementation process, the battery is electrically connected to the control module, and the control module can obtain battery parameters and is configure to: display a battery usage state and control the battery and other functional units. Both the battery and the control module can be electrically connected to the DC input, and the DC input charges the battery by connecting to DC charging equipment. Other elements that require electric energy in the lawn mower can obtain electric energy by being directly connected to the battery or electrically connected to the control module. Other elements include but are not limited to a driving motor, light source equipment, sound equipment, loudspeaker, and the like.

In this embodiment, optionally, the photovoltaic panel arranged on the vehicle body can charge the battery. The inverter portion of the lawn mower is connected to MPPT. The MPPT is connected to and arranged at an input interface on the lawn mower. After the external photovoltaic panel is connected to the input interface, the battery of the lawn mower can be charged. In this way, the solar energy is used reasonably, the energy utilization efficiency can be improved, and the operation cost can be reduced.

In this embodiment, optionally, the output component 200 is arranged at the rear part of the vehicle body 100. As shown in FIG. 5, the output component 200 includes an output panel 201 and a cover body arranged outside the output panel 201. The cover body may cover the output panel 201 and play a protection role. In an actual application process, the cover may be a single independent cover body or a combination of a plurality of cover bodies. In this embodiment, there are two cover bodies that cooperate with the output panel 201. The two cover bodies are an upper cover 202 and a lower cover 203. The two cover bodies are arranged at the top and bottom relative to the rear of the vehicle. The upper cover 202 is located above the lower cover 203, and the two cover bodies may be opened independently in opposite directions. For example, one side of the upper cover 202 away from the lower cover 203 is rotatably connected to the rear of the vehicle; and one side of the lower cover 203 away from the upper cover is rotatably connected to the rear of the vehicle. When both the upper cover 202 and the lower cover 203 are at a position of closing the output panel 201, one side of the upper cover 202 close to the lower cover 203 is docked to one side of the lower cover 203 close to the upper cover 202, so that the upper cover and the lower cover cooperate to achieve an effect of protecting the output panel 201.

Optionally, to facilitate the operation performed on the upper cover 202 and the lower cover 203, a groove may be arranged in a middle position of the side of the upper cover 202 close to the lower cover 203, and a groove may also be arranged in a middle position on the side of the lower cover 203 close to the upper cover 202. An operator can put the fingers into the grooves, so that slippage can be avoided in processes of opening and closing the upper cover 202 or the lower cover 203, and the operation is convenient and quick.

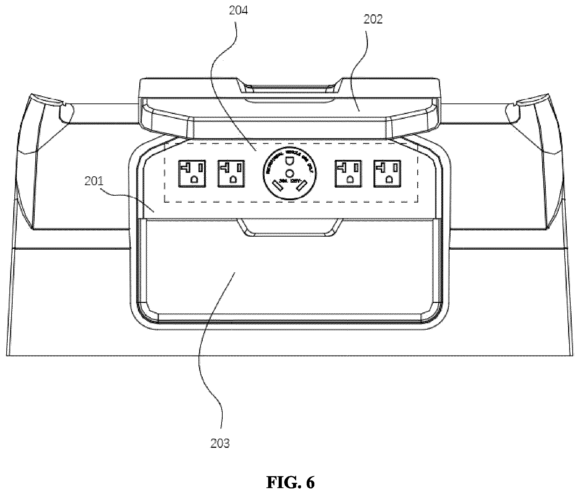

FIG. 6 shows a state where only the upper cover 202 is opened. In this state, an upper region of the output panel 201 is exposed. This region is an alternating current output region 204. Alternating current output ports can be arranged in this region. The alternating current output ports may include a 110 V output port, a 120 V output port, and a 220 V output port.

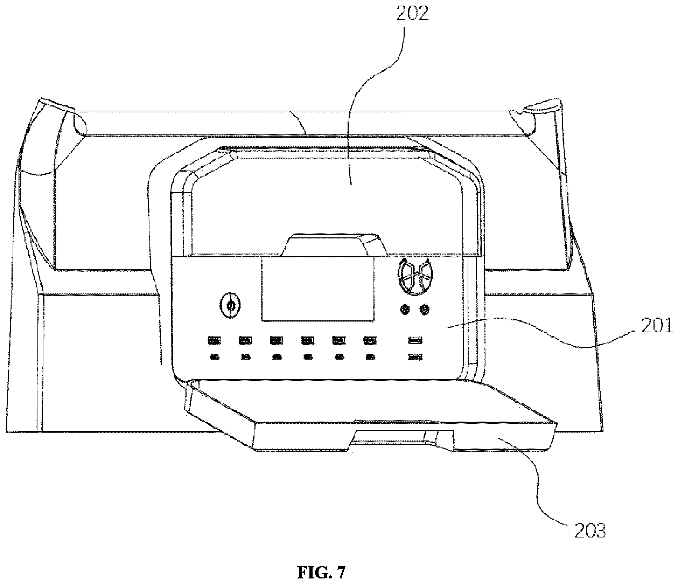

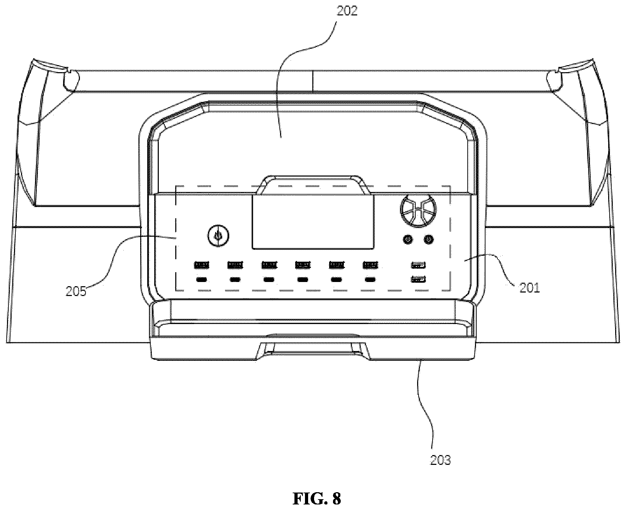

FIG. 7 and FIG. 8 show a state where only the lower cover 203 is opened. In this state, a lower region of the output panel 201 is exposed. This region is a direct current output region 205. Direct current output ports can be arranged in this region. The direct current output ports can include a USB port, a Type-C port, a DC5521 port, a cigarette lighter socket 208, and the like.

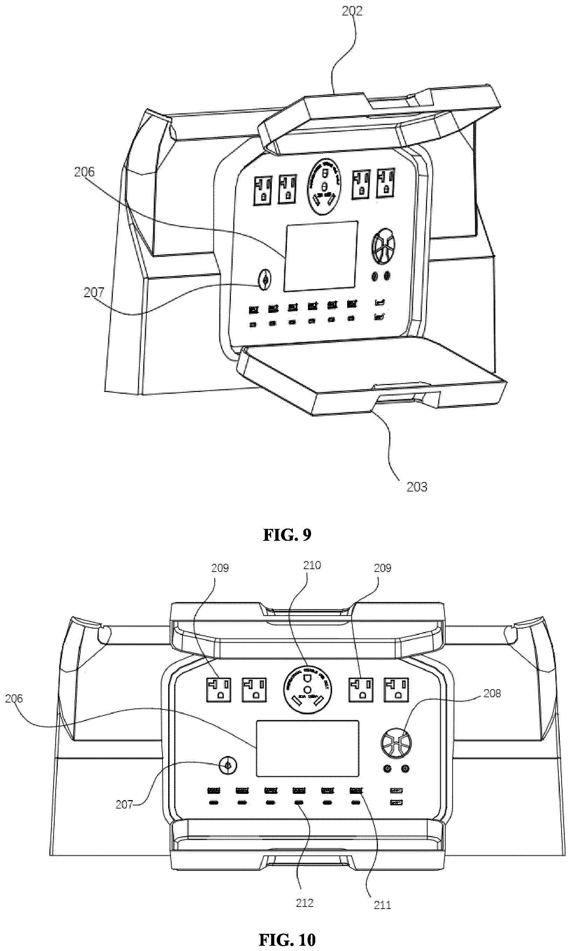

As shown in FIG. 9, a display element 206 and a switch button 207 are arranged on the output panel 201. The display element 206 is configured to display a battery usage state. The switch button 207 is configured to control turning on and turning off of the output component 200. Specifically, the switch button 207 may be configured to control turning on and turning off of the display element 206 and/or the output ports. It should be understood that the switch button 207 may be a touch key, a button, a knob, or the like.

As shown in FIG. 10, a plurality of ports on the output panel 201 are explained. A 120 V socket 209 and a 125 V socket 210 are arranged in the alternating current output region 204 of the output panel 201. The 125 V socket 210 may output current of 30 A and is configured to supply power to a recreational vehicle. A Type-A port 211, a Type-C port 212, a DC5521 port, and a cigarette lighter socket 208 are arranged in the direct current output region 205 of the output panel 201.

It should be noted that the display element 206 and the switch button 207 are arranged in a region that can be covered by the lower cover 203 on the output panel 201.

**In** this embodiment, optionally, a groove is arranged on the output panel 201. The alternating current output ports, the direct current output ports, the display element 206, the switch button 207, and the like are all arranged on a groove bottom wall of the groove. In this way, after the upper cover 202 and the lower cover 203 are closed, a size of the electric vehicle in a lengthwise direction can be reduced. Meanwhile, the alternating current output ports, the direct current output ports, the display element 206, the switch button 207, and the like are hidden in the groove, making them less likely to collide with objects in an external environment and difficult to damage.

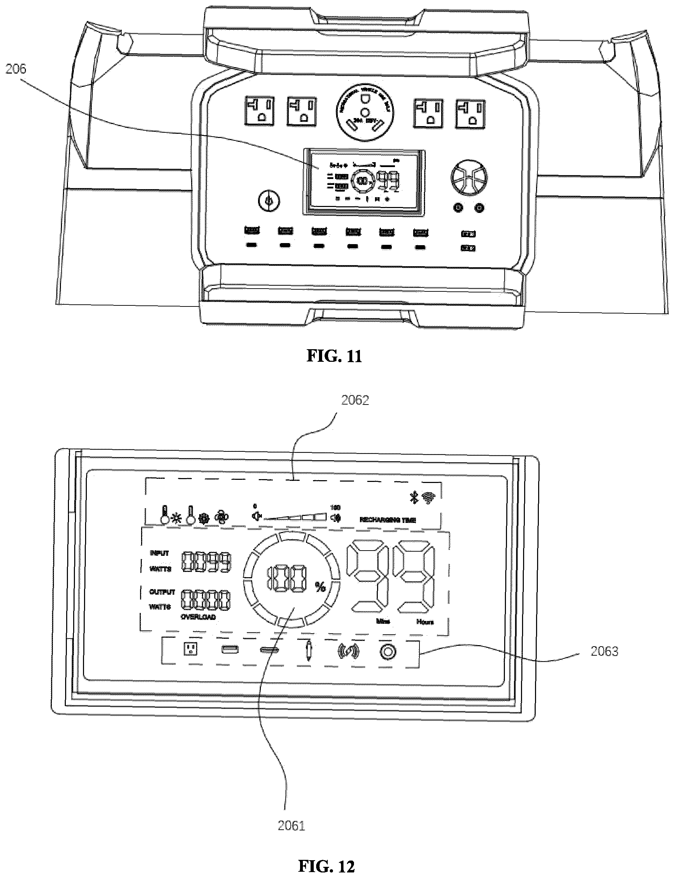

As shown in FIG. 11 and FIG. 12, specific display content of the display element 206 is shown. A display region of the display element 206 includes a battery state display region 2061, another state display region 2062, and an output state display region 2063. The battery state display region 2061 is located in the middle of the display region. The battery state display region 2061 is configured to display parameters such as a battery level and usable time. The battery state display region may also display input power, output power, and whether the input power and the output power are overloaded. The another state display region 2062 and the output state display region 2063 are located on an upper side and a lower side of the battery state display region 2061 respectively. The output state display region 2063 displays a working state of an output port; the working state includes: whether the output port is faulty and whether the output port is in use, and each type of port may be indicated by a separate icon. The another state display region 2062 is configured to display other information except information contained in the battery state display region 2061 and the output state display region 2063, specifically including a battery temperature, an ambient temperature, a state of a heat dissipater, a volume of sound source equipment, charging time, a Bluetooth connection state, a wireless connection state, and the like.

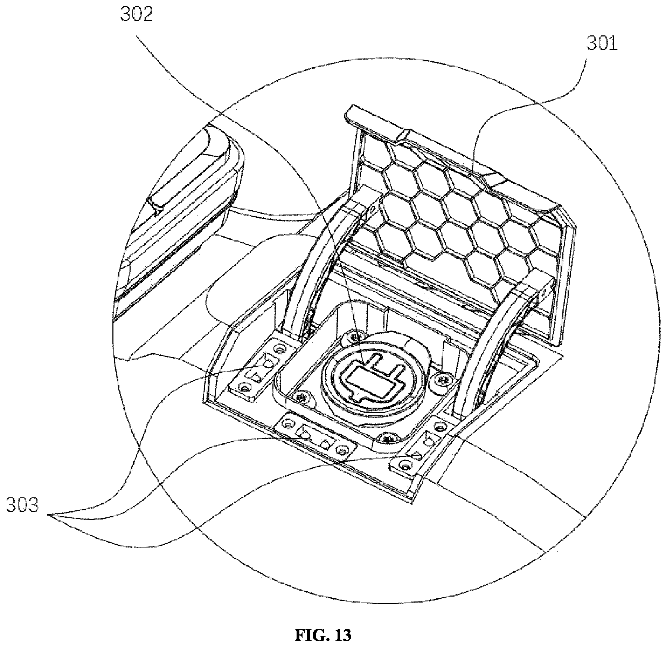

As shown in FIG. 13, a specific structure of the input component on the vehicle body 100 is shown. The input component is arranged on a housing of the vehicle body 100, and the input component includes a cover plate 301. The cover plate 301 is movably connected to the housing to switch between an opened state and a closed state. For example, the cover body 301 may be rotatably connected to the housing. After the cover plate is rotatably opened, the alternating current input interfaces and the direct current input interfaces may be exposed. Similarly, after the cover plate is rotatably closed, the alternating current input interfaces and the direct current input interfaces may be blocked. In this embodiment, optionally, there may be one alternating current input interface and a plurality of direct current input interfaces. The plurality of direct current input interfaces are arranged around the alternating current input interface, namely, the plurality of direct current inputs are arranged at a periphery of the alternating current input interface at intervals. The direct current input interfaces include a port connected to the photovoltaic panel.

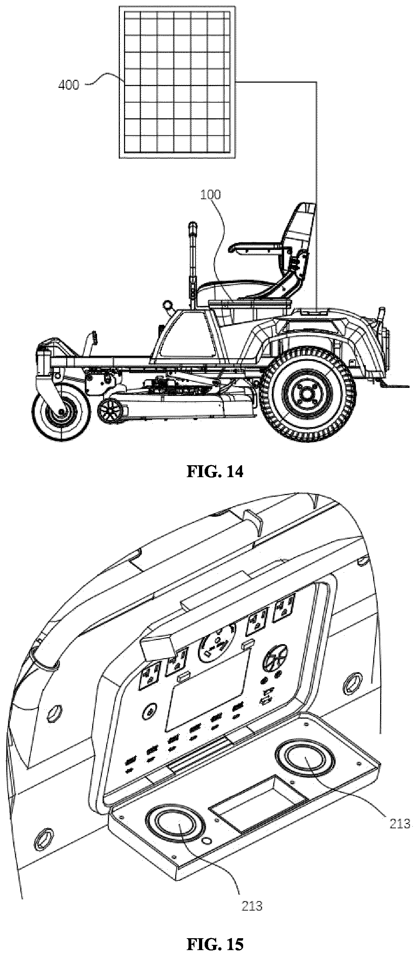

As shown in FIG. 14, during use, the photovoltaic panel may be connected to the vehicle body 100 through the direct current input interface, and the battery is charged using the photovoltaic panel. The photovoltaic panel may be placed in a storage space of the vehicle body 100 or fixedly arranged on the exposed housing of the vehicle body 100, for example, in a space above the rear part of the vehicle body 100. When the photovoltaic panel is in a storage form, a foldable photovoltaic panel can be used. When the vehicle body 100 runs out of power outdoors, the photovoltaic panel can be used to charge the battery of the vehicle body 100 to help a user get out of trouble.

### Embodiment II

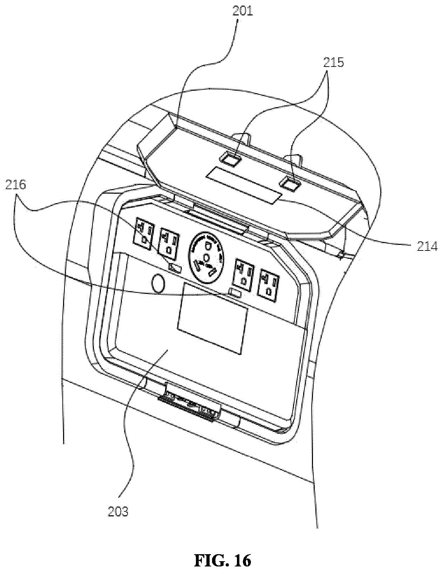

This embodiment also provides a power supply system and electric vehicle. This embodiment is a further improvement on the technical solutions of Embodiment I. To avoid repeated descriptions, the technical solutions of Embodiment I that have been disclosed will not be explained in detail in this embodiment. In this embodiment, an upper cover 202 and a lower cover 203 are also arranged outside the output panel 201. As shown in FIG. 15 and FIG. 16, a wireless charging element 213 is further arranged on an inner side of the lower cover 203 and is configured to wirelessly charge electronic equipment. A light source component 214 is arranged on an inner side of the upper cover 202 and is configured for lighting. The light source component 214 may be a light-emitting diode (LED) lamp or another light-emitting element. The upper cover 202 and the lower cover 203 are both hollow. The wireless charging element 213 and the light source component 214 are arranged in inner chambers of the upper cover 202 and the lower cover 203. Meanwhile, wires can be arranged through a hinge at a connection between the upper cover 202 and the output panel 201 and a hinge at a connection between the lower cover 203 and the output panel 201. This hinge connection and routing mode is relatively common in electronic equipment, and will not be described in detail in this embodiment. A pull rod or another component may be further added at a connection of the lower cover 203, so that the stability after opening can be improved. Namely, after the lower cover 203 is opened, the lower cover can be at a zero-degree angle with a horizontal plane, which means that after the lower cover 203 is opened, the lower cover is basically parallel to the horizontal plane. In this case, an inner side plane of the lower cover 203 faces upwards and is horizontally, making it convenient for electronic equipment such as a mobile phone to be placed on the inner side plane of the lower cover 203 for charging. The electronic equipment is placed horizontally and fits stably with the lower cover 203, so that the electronic equipment is hard to fall off and is safe and reliable. It should be understood that a positioning groove may be further arranged on the inner side plane of the lower cover 203, and the wireless charging element 213 is arranged in the positioning groove. Furthermore, electronic equipment to be charged may also be arranged in the positioning groove. By the positioning through the positioning groove, it is difficult for the electronic equipment to slide off from the inner side plane of the lower cover 203. It should be understood that in other embodiments, a limiting column may be further arranged on the inner side plane of the lower cover 203, and electronic equipment to be charged may be arranged on the inner side plane and in contact with the limiting column. The limiting column can play a role of limiting the position of the electronic equipment and avoid the electronic equipment from sliding off. There may be a plurality of limiting columns that are arranged annularly. The electronic equipment to be charged is located in a region encircled by the plurality of limiting columns. Optionally, the limiting column may alternatively be configured as an elastic column. The elastic column is in elastic contact with the electronic equipment to be charged, so that this has little wear, difficultly scratches the electronic equipment, and is used safely and reliably. Moreover, since the limiting column is the elastic column, the limiting column can generate deformation, so as to adapt to clamp and position electronic equipment with different sizes. The limiting column has a wide range of application and a good limiting effect.

In this embodiment, optionally, there is a certain limitation on opening and closing angles of the upper cover 202 and the lower cover 203. The opening and closing angle of the lower cover 203 does not exceed 180 degrees. In a more preferred state, the inner side plane of the lower cover 203 remains horizontal with a forward motion direction of the vehicle body 100 in the maximum opening and closing state of the lower cover 203. A maximum opening and closing angle of the upper cover 202 does not exceed 270 degrees. In a more preferred way, the opening and closing angle of the upper cover 202 does not exceed 180 degrees, or when the upper cover 202 is opened and closed to a vertical state, the upper cover can be fixed through a limiting structure. Feasibly, the limiting structure includes a positioning buckle arranged on a hinge connecting the upper cover 202 to the vehicle body 100, or an additional bracket. When the upper cover 202 is rotated upwards to a vertical state, the bracket can be used to keep fixing the upper cover.

It should be understood that when the lower cover 203 is rotated to the maximum opening and closing state, the lower cover may also be positioned through the positioning buckle or bracket, thereby improving the stability.

In this embodiment, optionally, both the upper cover 202 and the lower cover 203 are rotatably connected to the frame 101 through damping hinges. In this design, the position can be locked at any angle during the rotation. Meanwhile, in this embodiment, the output panel 201 is arranged vertically. The maximum opening and closing angle of the upper cover 202 is 180 degrees, and the maximum opening and closing angle of the lower cover 203 is 90 degrees. The upper cover 202 is arranged vertically when it is in a closed state. The lower cover 203 is arranged vertically when it is in a closed state.

In this embodiment, optionally, separate start buttons/switches may be further arranged on the inner sides of the upper cover 202 and the lower cover 203 for the light source component 214 and the wireless charging element 213. In another implementation, a sensor may be further arranged in the upper cover 202 and/or the lower cover 203. The sensor is configured to detect an opened state of the upper cover 202 and/or the lower cover 203. When the upper cover 202 and/or the lower cover 203 is opened, the light source component 214 on the upper cover 202 and/or the wireless charging element 213 on the lower cover 203 may be turned on automatically. Specifically, the sensor may be an angle sensor, a Hall sensor, or the like. When the angle sensor is used, an inclination angle of the upper cover 202 and/or the lower cover 203 may be detected to determine the opened and closed states of the upper cover 202 and/or the lower cover 203. When the Hall sensor is used, the Hall sensor and a magnetic material may be arranged on the upper cover 202 and the output panel 201 respectively. Whether the upper cover 202 is separated from the output panel 201 may be determined by detecting parameters of the Hall sensor, thereby determining the opened state of the upper cover 202. The lower cover 203 may also be detected using the same mode.

Namely, in some embodiments, a sensor may be arranged on the upper cover 202 and is configured to be linked with a turn-on switch of the light source component 214, which means that when the sensor on the upper cover 202 obtains that the upper cover 202 is opened to a preset angle, the light source component 214 is directly turned on. Similarly, in some embodiments, a sensor may be arranged on the lower cover 203 and is configured to be linked with a turn-on switch of the wireless charging element 213, which means that when the sensor on the lower cover 203 obtains that the lower cover 203 is opened to a preset angle, the wireless charging element 213 is directly turned on. Optionally, in some embodiments, sensors may be simultaneously arranged on the upper cover 202 and the lower cover 203 to correspondingly obtain opening angles of the upper cover 202 and the lower cover 203, thereby controlling an electronic element.

As shown in FIG. 16, a locking component may be further arranged between the cover body and the output panel 201 to position the cover body. In this embodiment, a first suction accessory 215 and a second suction accessory 216 are respectively correspondingly arranged on the upper cover 202 and the output panel 201, so that the upper cover and the output panel are magnetically sucked. The upper cover 202 is sucked and fixed by the first suction accessory 215 and the second suction accessory 216 when it is closed. It should be noted that a magnetic suction structure may be used between the lower cover 203 and the output panel 201 to lock the lower cover 203 when the lower cover is at the closed position.

It should be understood that both the first suction accessory 215 and the second suction accessory 216 may be configured as strong magnets. In addition, there may be a plurality of first suction accessories 215 and second suction accessories 216, thereby improving the suction effect. For example, in this embodiment, there are two first suction accessories 215 and two second suction accessories 216. The first suction accessories 215 are located on one side of the upper cover 202 close to the lower cover 203.

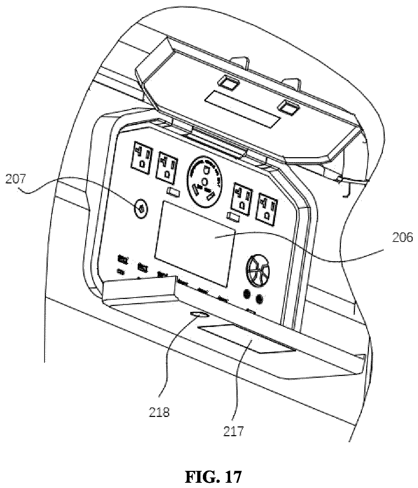

As shown in FIG. 17, the lower cover 203 is further provided with a transparent view element 217 and an auxiliary switch 218. The transparent view element 217 is made of a transparent material. When the lower cover 203 is closed, information displayed on the display element 206 may be viewed through the transparent view element 217. Meanwhile, the auxiliary switch 218 is configured to control turning on and turning off of the output component 200. Specifically, the auxiliary switch 218 may be configured to control turning on and turning off of the display element 206 and/or the output ports. In a practical operation, the auxiliary switch 218 may be an independent electronic switch. In another implementation, the auxiliary switch 218 may alternatively be a component that can slide relative to the lower cover 203. When the lower cover 203 is closed, the auxiliary switch 218 is pushed to slide relative to the lower cover 203 to an end portion to be in contact with the switch button 207 on the output panel 201, thereby controlling the switch button 207.

For ease of use, a voice module may be further arranged in the lawn mower. The voice module is configured to receive external sound information. The voice module may further process the received external sound information and generate, after the processing, a control instruction to control the display component 206 and control turning on and turning off of an alternating current output interface and a direct current output interface.

### Embodiment III

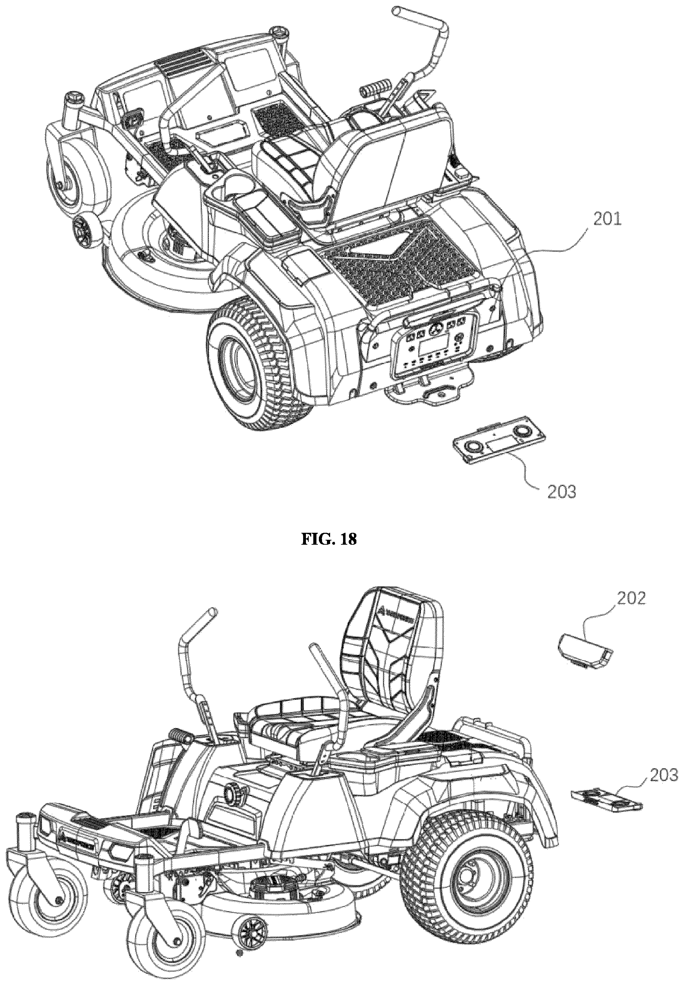

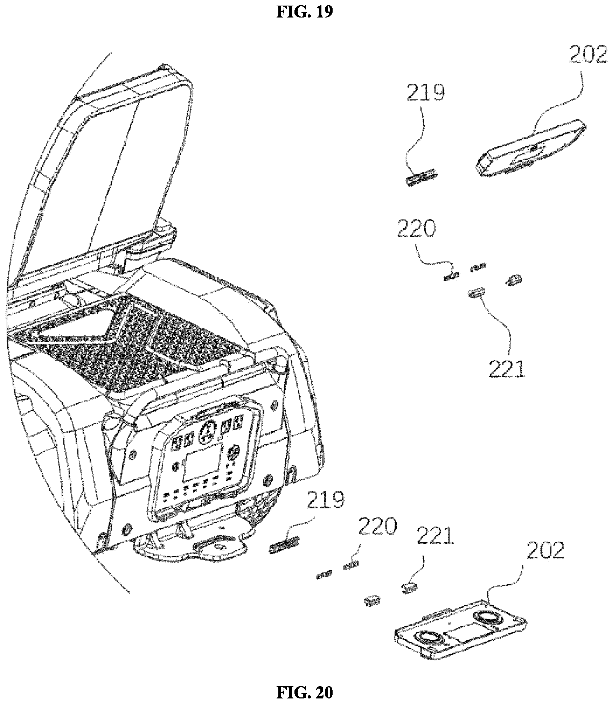

This embodiment also provides a power supply system and electric vehicle. This embodiment is a further improvement on the technical solutions of Embodiment I and Embodiment II. To avoid repeated descriptions, the technical solutions of Embodiment I and Embodiment II that have been disclosed will not be explained in detail in this embodiment. This embodiment mainly explains connection structures between the upper cover, as well as the lower cover, and the output panel. As shown in FIG. 18 and FIG. 19, the output panel 201 at the rear part of the vehicle body 100 is movably connected to the upper cover 202 and the lower cover 203. FIG. 20 shows a schematic exploded diagram of a connection structure between the upper cover 202 and the output panel 201, as well as a connection structure between the lower cover 203 and the output panel 201. Both the upper cover 202 and the lower cover 203 are movably connected to the output panel 201 through wrapping members 219, rotating members 220, and fixing members 221. In other words, the connection structure between the upper cover 202 and the output panel 201 and the connection structure between the lower cover 203 and the output panel 201 are the same.

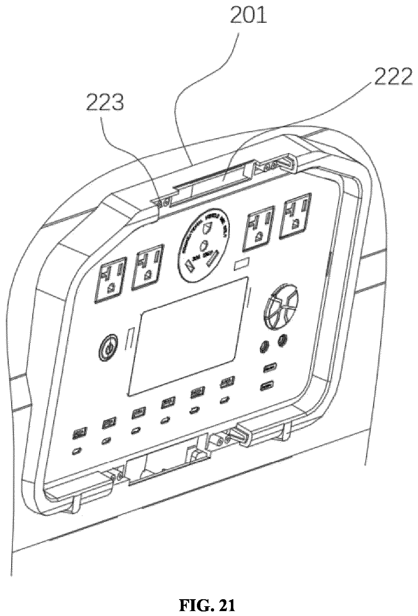

As shown in FIG. 21, mounting windows 222 and mounting seats 223 are arranged at positions, corresponding to the upper cover 202 and the lower cover 203, on the output panel 201. Namely, a mounting window 222 and a mounting seat 223 are arranged at a mounting position, corresponding to the upper cover 202, on an upper side of the output panel 201, and a mounting window 222 and a mounting seat 223 are arranged at a mounting position, corresponding to the lower cover 203, on a lower side of the output panel 201. There are two mounting seats 223 which are respectively arranged at two ends of the corresponding mounting window 222. The mounting window 222 is a strip-shaped open slot that penetrates through the output panel 201.

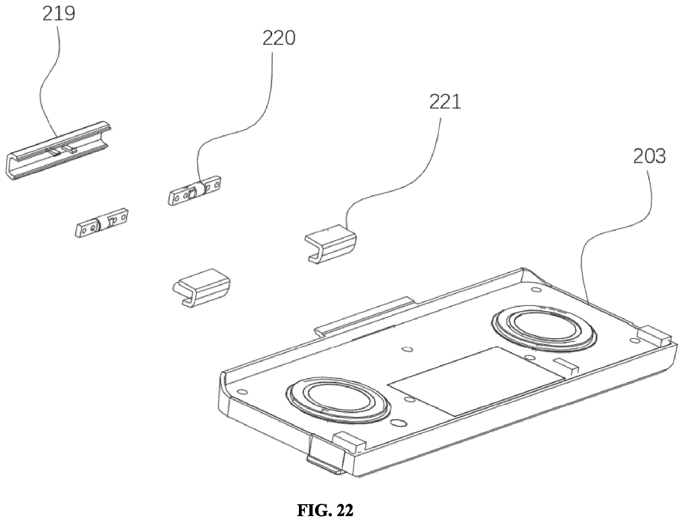

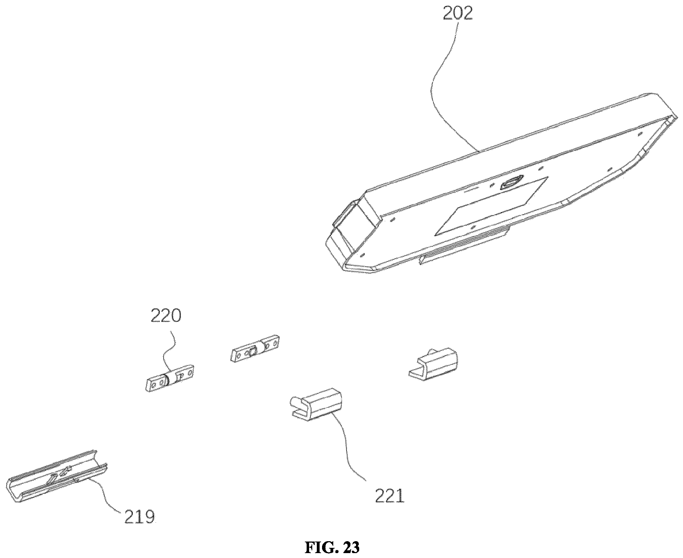

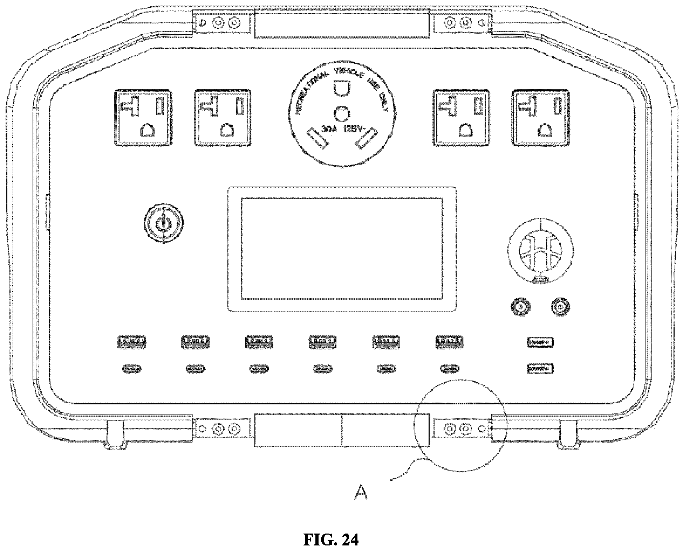

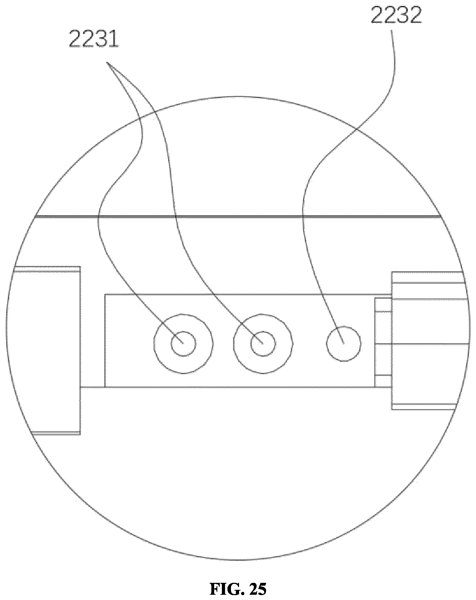

As shown in FIG. 22 and FIG. 23, FIG. 22 shows an exploded diagram of the connection structure of the lower cover 203, and FIG. 23 shows an exploded diagram of the connection structure of the upper cover 202. The connection structures for mounting the upper cover 202 and the lower cover 203 are set to be the same. To avoid repeated descriptions, this embodiment takes one connection structure as an example for explanation. The connecting structure includes a wrapping member 219, a rotating member 220, and a fixing member 221. As shown in FIG. 24 and FIG. 25, the mounting seats 223 include a rotary mounting seat 2231 and a fixed mounting seat 2232, and the rotary mounting seat 2231 is arranged close to the mounting window 222.

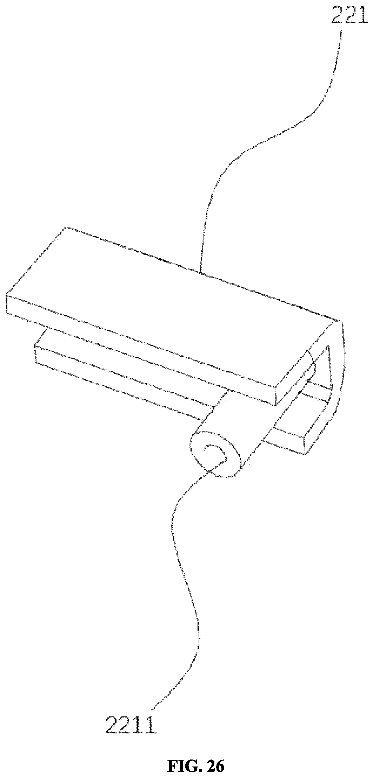

FIG. 26 shows a specific structure of the fixing member 221. The fixing member 221 is provided with a fixing seat 2211 and is configured to be connected to the fixed mounting seat 2232.

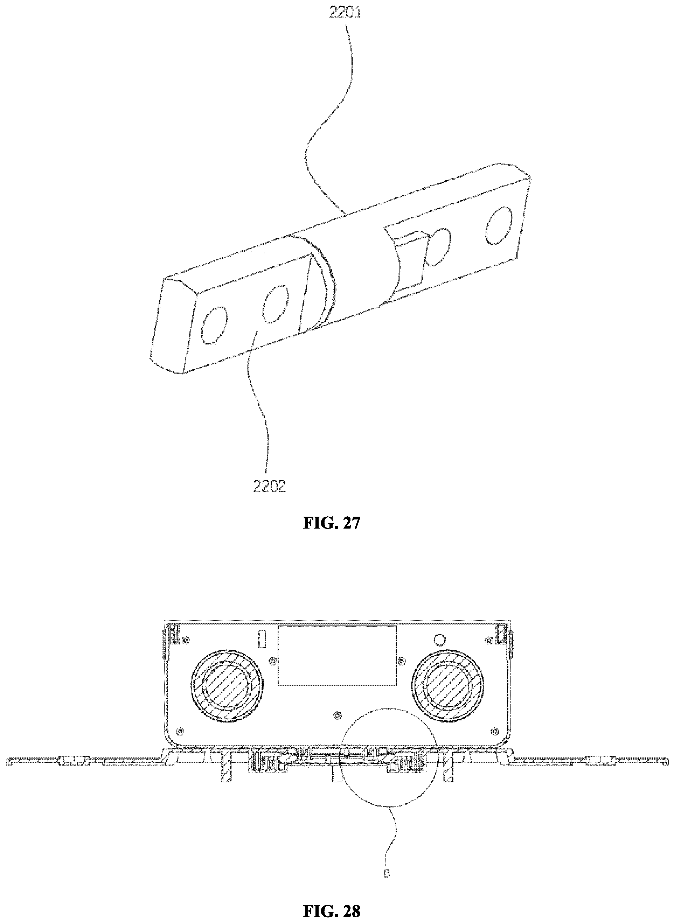

FIG. 27 shows a specific structure of the rotating member 220. The rotating member 220 includes a first rotating portion 2201 and a second rotating portion 2202. The first rotating portion 2201 and the second rotating portion 2202 are movably connected, and the first rotating portion 2201 and the second rotating portion 2202 may rotate relative to each other around the same rotation axis. The first rotating portion 2201 and the second rotating portion 2202 are each provided with a mounting hole and are configured to be fixedly connected to a connecting seat 224 and the rotary mounting seat 2231, respectively.

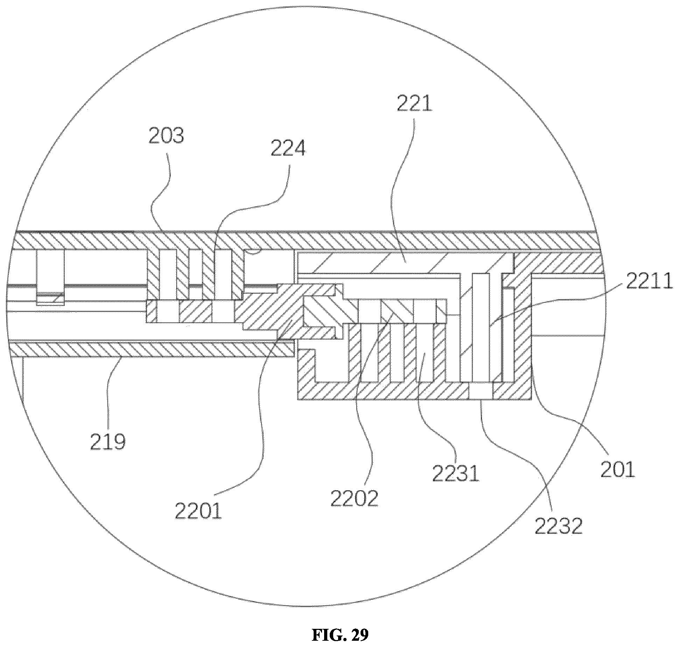

As shown in FIG. 28 and FIG. 29, FIG. 28 shows a sectional diagram of a connecting portion during connection between the lower cover 203 and the output panel 201, and FIG. 29 shows a schematic diagram of a partially enlarged structure in FIG. 28. It should be understood that a connection mode of the upper cover 202 is basically the same as that of the lower cover 203. To avoid repeated descriptions, in this embodiment, the connection portion of the lower cover 203 may be taken as an example for further explanation.

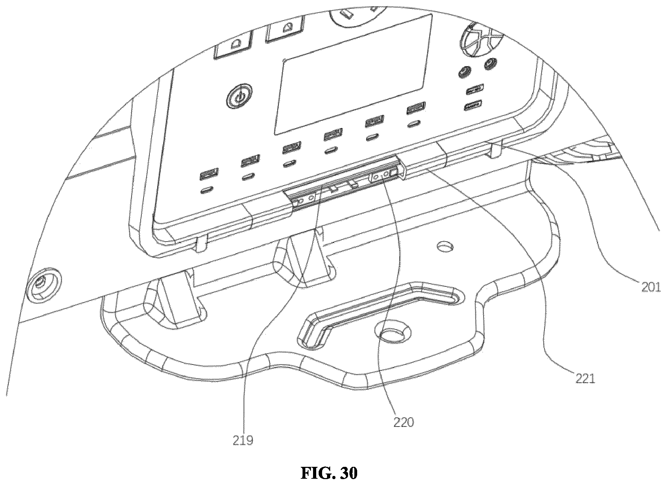

During mounting, the mounting hole on the first rotating portion 2201 is docked to a hole on the connecting seat 224 in the lower cover 203, and is fixed and connected by a bolt, a screw, a rivet, or the like. The mounting hole on the second rotating portion 2202 is docked to a hole on the rotary mounting seat 2231 in the output panel 201, and is fixed and connected by a bolt/screw/rivet. The fixing seat 2211 on the fixing member 221 is docked to the fixed mounting seat 2232 in the output panel 201. For ease of mounting, a mounting direction of the fixing member such as the bolt/screw/rivet that fixes the second rotating portion 2202 is opposite to a mounting direction of the fixing member 221. The lower cover 203 is connected to the wrapping member 219 through a buckle/bolt or in another way to form a chamber for wrapping the rotating member 220. In this embodiment, the lower cover 203 is fixedly connected to the wrapping member 219 through the buckle. As shown in FIG. 30, after being mounted, the wrapping member 219 also covers a space of the mounting window 222.

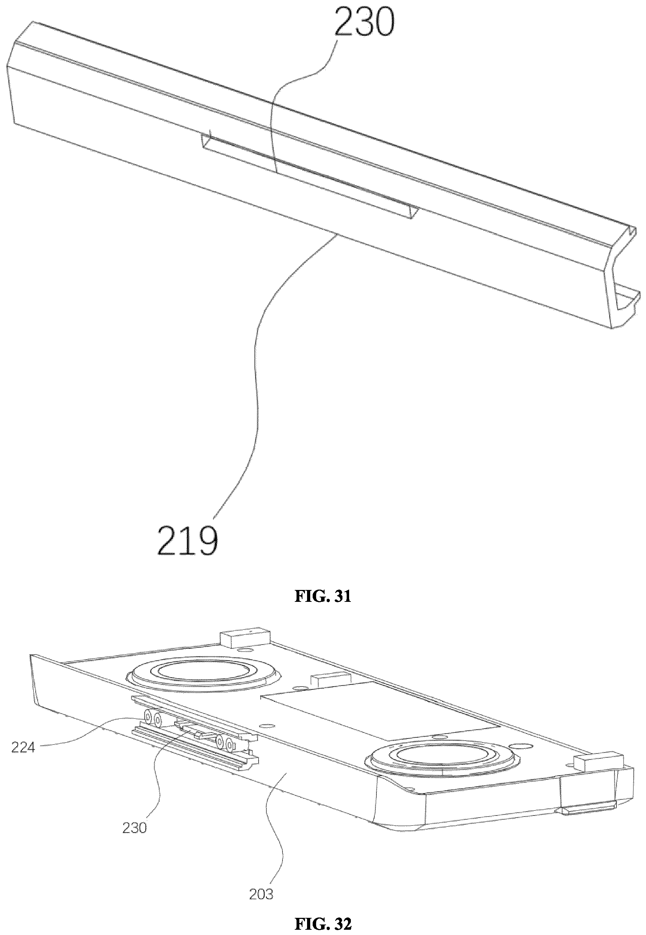

As shown in FIG. 31 and FIG. 32, both the wrapping member 219 and the lower cover 203 are provided with routing notches 230 configured for wiring arrangement. Wiring harnesses required to be connected to the electronic components in the lower cover 203 are introduced into the vehicle body 100 through the routing notches 230 and are connected to the relevant electronic components. Similarly, the upper cover 202 is also provided with a routing notch 230 configured for wiring arrangement, so as to reduce a length of a wiring harness and facilitate wire arrangement.

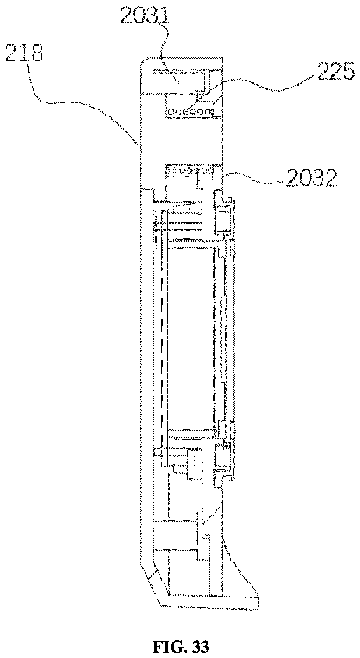

As shown in FIG. 33, an auxiliary switch 218 is arranged on the lower cover 203. The lower cover 203 includes a housing 2031 and a bottom plate 2032. The auxiliary switch 218 is movably connected to the lower cover 203, and an elastic member is arranged between the housing 2031 and the bottom plate 2032 to provide potential energy for the auxiliary switch 218 to move towards an outer side of the housing 2031. Namely, the elastic member is always in a compressed state, which can make the auxiliary switch 218 have a trend to move in a direction from the bottom plate 2032 to the housing 2031. It should be noted that the elastic member may be a spring 225. When the lower cover 203 is closed, the auxiliary switch 218 is pressed. The auxiliary switch 218 moves towards the output panel 201 and can be in contact with the switch button 207 on the output panel 201 to control the switch button 207. After the auxiliary switch 218 is released, under the action of the elastic member, the auxiliary switch 218 is reset, and the auxiliary switch 218 is separated from the switch button 207 on the output panel 201.

It should be noted that a limiting protrusion is arranged on the housing 2031. Correspondingly, the auxiliary switch 218 is provided with an abutment protrusion. The abutment protrusion is in contact with one side of the limiting protrusion close to the bottom plate 2032. Therefore, under an elastic force of the elastic member, the auxiliary switch 218 may not be separated from the housing 2032.

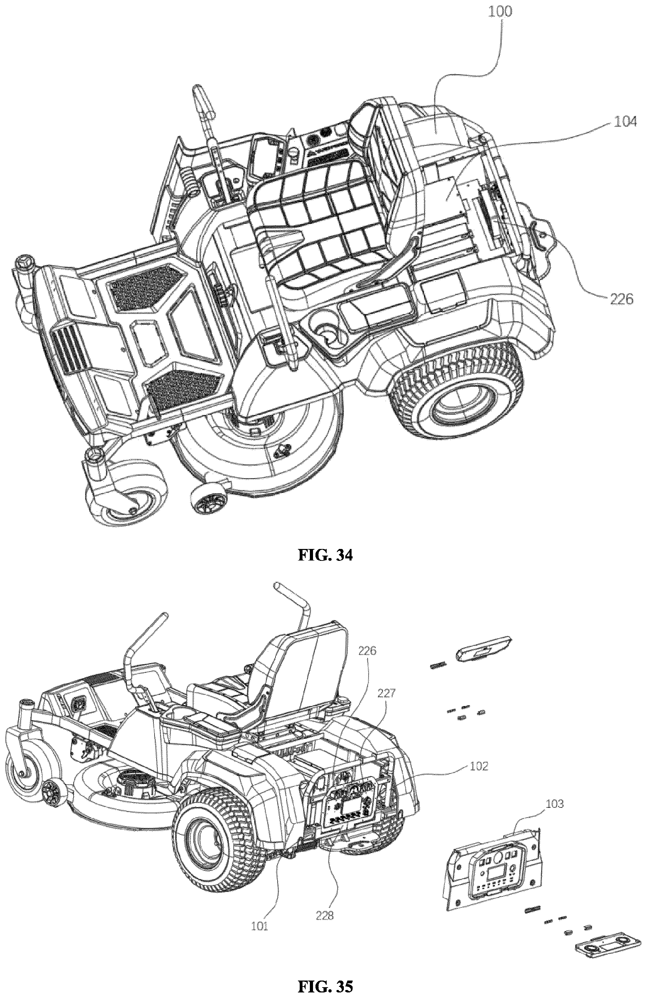

As shown in FIG. 34 and FIG. 35, a cavity is arranged inside the vehicle body 100. The cavity can accommodate a battery pack and other relevant electronic elements, such as the inverter and the MPPT assembly. The vehicle body 100 includes a frame 101 that plays a supporting role. A vertical rear bracket 102 is arranged at a rear end of the frame 101, and a rear covering member 103 is mounted on the rear bracket 102. The output panel 201 is located on the rear covering member 103. Meanwhile, an auxiliary bracket 228 is further arranged at the rear end of the frame 101, and a bottom end of the auxiliary bracket 228 is fixedly connected to the frame 101. The entire auxiliary bracket 228 is of a closed ringlike structure, and its contour is close to an outer contour of the output panel 201. A plurality of connecting points are uniformly arranged at a circle of the outer contour of the auxiliary bracket 228, and the plurality of connecting points are simultaneously fixedly connected to the rear covering member 103. A space between adjacent connecting points does not exceed 20 cm. The structural setting of the auxiliary bracket 228 can improve the overall strength of the output panel 201 and reduce the deformation of the output panel during use. Interfaces and electronic elements related to the output panel 201 are integrated on a PCB 227. The PCB 227 is fixedly connected to an inner side of rear covering member 103. The PCB 227 is located in an inner circle enclosed by the auxiliary bracket 228. A cooling element 226 is further arranged in the cavity of the vehicle body 100. The cooling element 226 is configured to cool the PCB 227. In this embodiment, optionally, the cooling element 226 may be a cooling fan. In order to avoid an extremely high temperature of the electronic elements in the vehicle body, a distance between the PCB 227 and an edge of a battery pack 104 is not less than 5 cm. For example, in this embodiment, the distance between the PCB 227 and the edge of the battery pack 104 is set to 10 cm. Meanwhile, when the cooling element 226 is the cooling fan, the cooling element 226 is placed in a manner of being staggered from a cooling fan in the battery pack 104.

The above descriptions are only preferred embodiments of the present disclosure, and are not intended to limit the present disclosure. For those skilled in the art, the present disclosure may have various modifications and changes. Any modification, equivalent replacement, and improvement made within the spirit and scope of the present disclosure shall fall within the protection scope of the present disclosure.

### Industrial practicability

The power supply system and the electric vehicle provided in this embodiment have diversified functions, are used conveniently and flexibly, and has a wide range of application.

## Claims

1. A power supply system and electric vehicle, comprising:
a battery;
an input component and an output component, wherein
the input component comprises an alternating current input interface and a direct current input interface;
the output component comprises an alternating current output interface and a direct current output interface; and
an inverter, wherein the inverter is configured to perform conversion between alternating current and direct current.

2. The power supply system and electric vehicle according to claim 1, wherein the output component comprises an output panel; the output panel is arranged at a housing portion of the electric vehicle; and the output panel is further provided with an openable cover plate.

3. The power supply system and electric vehicle according to claim 2, wherein the cover plate is provided with a light-emitting element and/or a wireless charging component.

4. The power supply system and electric vehicle according to claim 2 or 3, wherein the output panel is provided with an alternating current output region and a direct current output region which are arranged at an interval; an alternating current output interface is arranged at a position, corresponding to the alternating current output region, on the output panel; and a direct current output interface is arranged at a position, corresponding to the direct current output region, on the output panel.

5. The power supply system and electric vehicle according to claim 4, wherein a display element configured to display parameter information of the electric vehicle is mounted on the output panel.

6. The power supply system and electric vehicle according to claim 5, wherein a switch button is arranged on the output panel and is configured to control turning on and turning off of all the interfaces and/or the display element on the output panel.

7. The power supply system and electric vehicle according to claim 5 or 6, wherein a display region of the display element comprises a battery state display region, another state display region, and an output state display region; the battery state display region is located in the middle of the display region; the another state display region and the output state display region are located on an upper side and a lower side of the battery state display region respectively; or, the another state display region and the output state display region are located on a left side and a right side of the battery state display region respectively;
the battery state display region is configured to display a battery level, usable time, input power, output power, and whether the power is overloaded;
the output state display region displays a working state of an output port; the working state of the output port comprises: whether the output port is faulty and whether the output port is in use, and each type of port is indicated by a separate icon; and
the another state display region is configured to display other information except information contained in the battery state display region and the output state display region.

8. The power supply system and electric vehicle according to any one of claims 5 to 7, wherein a transparent view element made of a transparent material is arranged on the cover plate; and the transparent view element is configured to view information on the display element through the transparent view element when the cover plate is closed.

9. The power supply system and electric vehicle according to any one of claims 2 to 8, wherein the cover plate comprises at least two cover bodies that are independently openable; and the at least two cover bodies are able to cover the entire output panel after being closed.

10. The power supply system and electric vehicle according to any one of claims 4 to 8, wherein the cover plate comprises at least two cover bodies that are independently openable; and the at least two cover bodies are configured to cover the alternating current output region and the direct current output region respectively after being closed.

11. The power supply system and electric vehicle according to claim 9 or 10, wherein the cover plate comprises an upper cover and a lower cover; a lighting component is arranged on an inner side of the upper cover; and the wireless charging component is arranged on an inner side of the lower cover.

12. The power supply system and electric vehicle according to claim 11, wherein a sensor is mounted in the upper cover and/or the lower cover; the sensor is configured to detect an opening state of the upper cover and/or the lower cover; and when the upper cover and/or the lower cover is opened, the lighting component on the upper cover and/or the wireless charging component on the lower cover is automatically turned on.

13. The power supply system and electric vehicle according to any one of claims 2 to 12, wherein the cover plate is movably connected to the output panel through a connecting structure to enable the cover plate to switch between a closed state and an opened state.

14. The power supply system and electric vehicle according to claim 13, wherein the connecting structure comprises a wrapping member, a rotating member, and a fixing member; the wrapping member is connected to the output panel, and the wrapping member and the output panel cooperate with each other to define a mounting chamber; the rotating member is rotatably mounted in the mounting chamber; and the cover plate is connected to the rotating member to enable the cover plate to rotate relative to the output panel.

15. The power supply system and electric vehicle according to any one of claims 2 to 14, wherein a magnetic suction component is arranged between the cover plate and the output panel.
